# EUROPÄISCHE PATENTSCHRIFT

(11) **EP 1 072 874 B1**
(45) Veröffentlichungstag und Bekanntmachung des Hinweises auf die Patenterteilung: **11.10.2006**
(21) Anmeldenummer: 00810618.9
(22) Anmeldetag: 14.07.2000
(51) Int. Cl.: G01G 19/02, G08G 1/02

(54) **Verfahren und Vorrichtung zur Bestimmung des Fahrzeuggewichtes bei fahrendem Fahrzeug**
Method and apparatus for determining the weight of a moving vehicle
Procédé et appareil de détermination du poids d'un véhicule roulant

(30) Priorität: 17.07.1999 CH 131299
(43) Veröffentlichungstag der Anmeldung: 31.01.2001
(73) Patentinhaber: Contraco SA, 6775 Ambri, TI (CH)
(72) Erfinder: Celio, Tino, 6775 Ambri, TI (CH)

(56) Entgegenhaltungen:
- EP-A- 0 384 874
- EP-A- 0 691 530
- WO-A-98/40705
- DE-U- 9 411 072
- FR-A- 2 158 111
- US-A- 4 064 955

## Beschreibung

Die Erfindung betrifft ein Verfahren und eine Vorrichtung zur Bestimmung des Gewichtes von Fahrzeugen während ihrem Vorbeilauf auf einer Strasse.

Es ist bekannt, dass die Messung des Fahrzeuggewichtes heute eine der wichtigen Aufgaben der Verkehrsüberwachung ist und wofür genaue Grenzen gesetzmässig festgelegt worden sind. Die Gewichtbestimmung kann statisch (das Fahrzeug wird aus dem Verkehr gezogen und auf einer klassischen Waage gewogen) oder dynamisch (die Wägung erfolgt direkt entlang der Fahrbahn). Für letzte Messart wurde die angelsächsische Bezeichung WIN (Weight-In-Motion) geprägt.

"Es sind Systeme bekannt , welche auf die Verwendung von zwei linearen Sensoren basieren (WO-A9810705)(FR-A-0384874). Diese Systeme können prinzipiell nur die Geschwindigkeit des Fahrzeuges ermitteln.

Es sind femer Systeme bekannt , welche die Verwendung mehrerer Sensoren vorsehen, welche aber zur Ermittlung der quer zur Fahrrichtung auftretenden Schubkräften (DE-U-9411072) bzw. des Schwingungsverhaltens des Fahrzeuges (EP-A-691530) bestimmt sind".

Diese Systeme weisen aber eine Genauigkeit auf, welche nur für die Vorselektion ausreicht. Das suspekte Fahrzeug muss also nach wie vor auf eine statische Waage umgeleitet werden. Hauptgründe hiezu liegen in der inhärenten Ungenauigkeit der verwendeten Sensorenanordnung sowie in der ungenügenden Erfassung der örtlichen und zeitlichen vom vorbeilaufenden Fahrzeug verursachten Druckveränderungen (Lage auf der Fahrbahn,Beschleunigung, Bremsung).

Es ist Aufgabe der vorliegenden Erfindung ein WIM-Verfahren anzugeben, welches die Bestimmung des Fahrzeugsgewichtes bei voller Fahrzeugsgeschwindigkeit und mit einer für die polizeiliche Bestrafung ausreichenden Genauigkeit gestattet.

Die Erfindung geht vom Einsatz von quer in der Fahrbahn eingelassenen linienförmigen Drucksensoren aus und zeigt, dass erst durch die Verwendung von mindestens 3 Sensoren und einer raffinierten Signalverarbeitung möglich ist, die Bestimmung des Fahrzeugsgewichtes mit der gewünschten Genauigkeit vorzunehmen.

In der Folge wird die Erfindung anhand von Zeichnungen näher erläutert. Es zeigen:
- Fig.1: eine typische Messstrecke, welche nach dem erfindungsgemässen Verfahren ausgelegt ist.
- Fig.2: die notwendige Signalverarbeitung
- Fig.3: die speziellen mechanisch-hydraulisch linearen Drucksensoren.
- Fig.4: das in die Fahrbahn zu verlegende Profil
- Fig.5: die Einfräsung der Fahrbahn

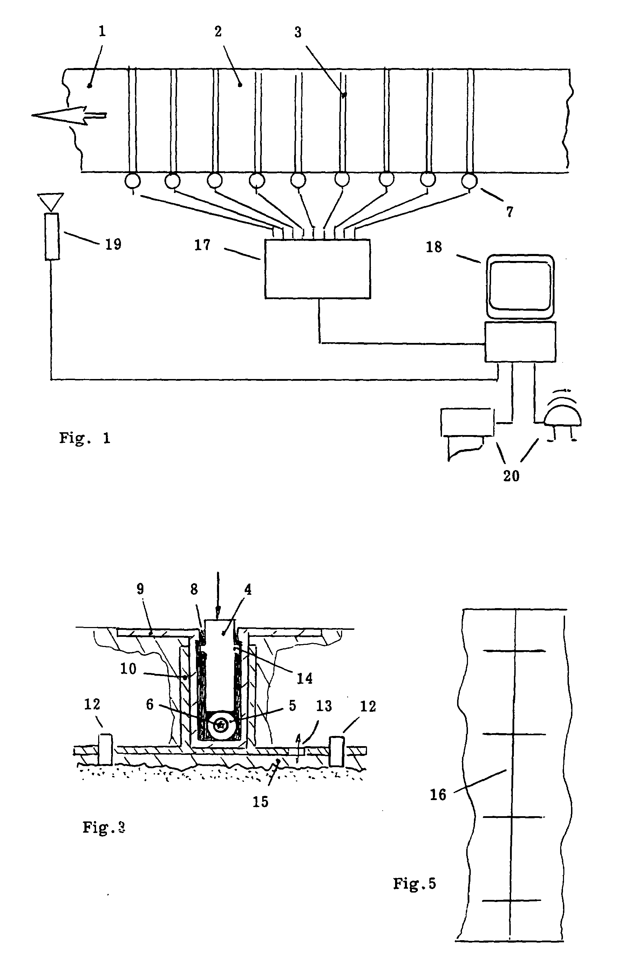

Fig. 1 stellt eine typische Messstrecke dar, welche als Messfläche (2) ausgelegt ist. Sie hat die Breite der Fahrbahn (1) und in ihr sind mehrere (mindestens 3) Sensoren eingelassen. Die Anzahl der Sensoren richtet sich nach der Genauigkeit der einzelnen Sensoren und nach der verlangten Messgenauigkeit (heute 5%) aus.

Am Ende von jedem Drucksensor 3 ist ein Manometer 7 montiert, welches der im Sensor entstehende Gesamtdruck erfasst.
Der Abstand der Sensoren soll grösser als die Radauflagenlänge aber kleiner als der kleinstvorkommende Fahrzeug-Achsenabstand sein. Damit wird erreicht, dass einerseits ein vorbeilaufendes Rad nur jeweils einen Sensor unter Druck setzt und, dass anderseits eine möglichst kompakte Messfläche (2) unter Bewahrung einer annehmbaren Datenrate entsteht.

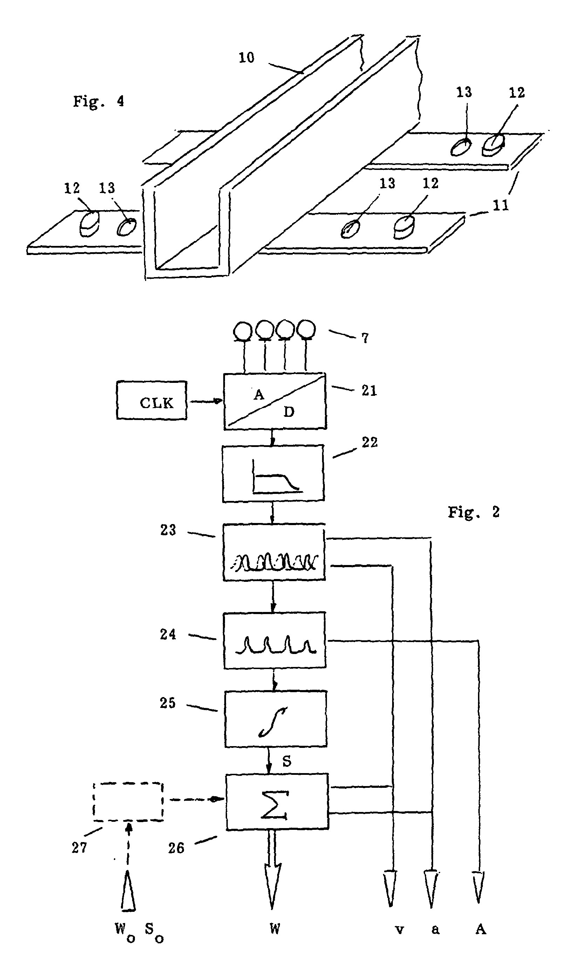

Die Funktionsweise der erfindungsgemässen Anordung ist folgende. Jede vorbeilaufende Fahrzeugsachse erzeugt auf dem linearen Sensor (3) einen Druck , welcher integral von einem (oder gegebenenfalls von mehreren) Manometer (7) erfasst wird. Die Druckwerte der einzelnen Manometern werden im Multiplexer 17 gesammelt und an den Rechner 18 weitergeleitet, welcher die notwendige Datenverarbeitung vornimmt. Sie umfasst (fig.2)
- zeitliche und amplitudenmässige Ueberabtastung (oversampling) der Sensorensignale (21)
- Filtrierung der nichtrelevanten Daten (22)
- Ueberlagerung, mittels Kreuzkorrelation der von den einzelnen Sensoren abgegeben Information (23), daraus Ermittlung von Geschwindigkeit v und Beschleunigung a des Fahrzeuges
- Ermittlung des signifikanten Durchfahrt-Druckprofils (24) und Bestimmung der Anzahl Fahrzeugsachsen A
- Bestimmung des jede Fahrzeugsachse beaufschlagenden Gewichtes S (25)
- Bestimmung des Gesamtgewichtes des Fahrzeuges W (26) unter Berücksichtigung der herrschenden Geschwindigkeits- und Beschleunigungsbedingungen

Wird Uebergewicht festgestellt, wird eine Fernsehcamera (19) aktiviert, welche Nummernschild und Form des Fahrzeuges festhält. Ein Alarmsignal (20) kann ferner erzeugt und protokolliert werden.

Durch das erfindungsgemässe Verfahren wird folgendes erreicht:
- Messung des Fahrzeugsgewichtes bei voller Geschwindigkeit
- ausreichende Genauigkeit für polizeiliche Bestrafung
- gleichzeitige Bestimmung von Geschwindigkeit und Beschleunigung des Fahrzeuges
- vollständig automatischer Betrieb
- Erstellung von vollumfänglichen Statistiken (Verkehrsintensität, Geschwindigkeit, Gewicht, usw)

Eine spezielle Ausgestaltung des Rechners von Fig.2 betrifft die Eichung des Systems. Sie erfolgt mittels Durchfahrt eines Normfahrzeuges, wovon die Belastung der einzelnen Achsen und das Gesamtgewicht bekannt sind. Das System misst und eicht sich selbsttätig anhand einer Regelschleife (27), welche die Kombinationsparameter vom Gewichtsrechner 26 nachstellt.

Eine weitere spezielle vorrichtungsmässige Ausgestaltung der Erfindung betrifft die linieförmigen Sensoren, welche als mechanisch-hydraulisches System implementiert sind. Sie bestehen (fig.3) aus einem Kolbenelement (4), welches knapp aus Gehäuse 9 hervorragt und an welchem, im unteren Teil, ein deformierbares, dichtes, eine inkompressible Flüssigkeit (6) enthaltendes Rohr (5) befestigt ist.

Letztes kommuniziert mit dem elektronischen Manometer 7, welcher am Rande der Fahrbahn aufgestellt ist. Der Spalt zwischen Kolben 4 und Gehäuse 9 wird mit einem elastischen Kitt (8) abgedichtet.
Der Kolben selbst kann sich nur nach unten bewegen. Die Bewegung nach oben wird durch speziell geformte Anschläge (14) verhindert. Die Länge von Kolben 4 (in Richtung quer zur Fahrbahn) entspricht ungefähr der Reifenbreite. Rohr 5 ist hingegen durchgehend.
Die Lineardetektoren sind also aus einer Anzahl Kolben 4 gebildet, welche wiederum als Module mit einer Breite von ca 1 cm und einer Höhe von ca 5 cm ausgelegt sind. Die Module selbst, um den verschiedenen Fahrbahnbreiten gerecht zu werden, sind als Sortiment mit bevorzugten Längen ( z.B. 50,100,200,300 cm ) konzipiert und können mittels hydraulischen Kupplungen in Serie geschaltet werden.
Ihre Verlegung erfolgt auf indirekte Weise. Zunächst (Fig.5) wird der Fahrbahnbelag mittels Fräse eingeschnitten (16), und anschliesend (Fig.4) Profil 10 verlegt, welches mit Querrippen (11) versehen ist, um die Längsstabilität zu erhöhen.
Es wird zunächst auf die richtige Höhe mittels Schrauben 12 justiert und anschliessend mittels Betoninjektionen (15) durch Eintritts- und Austrittslöcher 13 befestigt. Lineardetektoren 3 werden dann ins Profil 10 verlegt.

Die Vorteile dieser bevorzugten Ausstattung der Linearsensoren sind:
- unveränderte Uebertragung des örtlich entstehenden Drucks and die Manometer
- nur ein einziges Manometer pro Linearsensor
- einfache modulartige Anpassung an die Fahrbahnbreite
- einfache Verlegung des Halteprofils 10 durch blossen Einschnitt des Fahrbahnbelages
- Einfache Reinigung und problemloses Auswechseln der Linearmodule

### Ausführungsbeispiel

### Messfläche

- Breite 3 Meter
- Länge 8 Meter
- Anzahl Sensoren 9
- Sensorenabstand 1 Meter

### Gewichtsmessung

- Auflösung 25 kg
- Genauigkeit 50 kg (oder 5%)
- Achsenbelastung 250 - 10000 kg
- Anzahl Fahrzeugsachsen 1 - 8
- Fahrzeugsgewicht 500 - 60000 kg
- Messdauer 1 - 10 Sekunden

### Bewegungsmessung

- Geschwindigkeit Bereich 1 - 150 km/h
   Genauigkeit 1%
- Beschleunigung Bereich 0 - 10 m/sec²
   Genauigkeit 10%

### Sensoren

- Kolben 10x30x100 mm (BxHxL)
- Module 0,5/1/2/3 Meter

## Patentansprüche

1. Verfahren zur Bestimmung des Fahrzeuggewichtes von fahrenden Fahrzeugen mittels quer zur Fahrbahn (1) aufgestellten linienförmigen Drucksensoren (3)
**dadurch gekennzeichnet,**
**dass** mindestens drei Drucksensoren (3) eingesetzt werden,
**dass** die von den ersten drei Sensoren abgegebenen Signale mittels Kreuzkorrelation (23) ausgewertet werden und daraus die Geschwindigkeit und die Beschleunigung errechnet werden,
**dass** aus den von den drei ersten und gegebenfalls aus den von den übrigen Sensoren abgegebenen Signalen mittels zeitlicher Überlagerung ein Durchfahrt Druckprofil (24) bestimmt wird und
**dass** mittels Integration (25) des jeder Achse entsprechenden Druckprofils (24) das jede Gewicht sowie durch nachträgliche Summa Fahrzeugsachse beaufschlagende tion (26) das Gesamtgewicht des Fahrzeuges ermittelt wird.

2. Vorrichtung nach Anspruch 1
**dadurch gekennzeichnet,**
**dass** der Sensorabstand grösser als die Radauflagenlänge aber kleiner als der kleinstmögliche Achsenabstand ist

3. Vorrichtung nach Anspruch 1 und 2
**dadurch gekennzeichnet,**
**dass** die linienförmigen Sensoren mechanisch-hydraulischer Art sind

4. Vorrichtung nach Anspruch 3
**dadurch gekennzeichnet,**
**dass** die Sensoren aus Elementen gebildet sind, welche aus einem Kolben (4) und aus einem daran befestigten, elastisch deformierbaren, mit einer inkompressiblen Flüssigkeit (6) gefüllten Rohr (5) bestehen.

## Claims

1. Procedure for the measurement of the weight of vehicles in motion by means of linear sensors (3) placed transversally to the roadway (1)
**characterized by** the facts
that at least three pressure sensors (3) are employed
that the signals emitted by the first three sensors (23) are processed and out of them speed and acceleration of the vehicle are determined
that from the signals emitted by the first three sensors and from the other possible additional sensors a pressure profile (24), correspondent to the transition of the vehicle, is determined by means of superpositions based on temporal signal-shift
that by means of integration (25) of the pressure profile (24) the weight correspondent to each axle and, through subsequent summation (26), the total weight of the vehicle are determined

2. Device according to claim 1
**characterized by** the fact
that the distance between the sensors is greater that the contact lenght of the tires on the raod but shorter the the distance between the axles of the vehicle

3. device according to claims 1 and 2
**characterized by** the fact
that the sensors are of the mechanical-hydraulical type

4. Device according to claim 3
**characterized by** the fact
that the sensors are formed by elements comprizing a piston (4) that acts on an elastically deformable pipe (5) that is filled with a non compressible liquid (6)

## Revendications

1. Procédé pour la mesure du poids de véhicules en mouvement moyennant des senseurs linéaires (3) posés transversalement par rapport à la chaussée d'écoulement (1)
**caractérisé par** les faits
que au moins trois senseurs de pression (3) sont employés
que les signaux délivrés par les premiers trois senseurs (23) sont processés et que d'eux la vitesse et l'accélération du véhicule sont dérivés
que des signaux délivrés par les trois premiers senseurs, et éventuellement par les senseurs suivants, le profil de pression (24) engendré par le passage du véhicule est dérivé au moyen de superposition par décalage temporel
que au moyen d'intégration (25) du profil de pression (24) le poids correspondant de chaque axe du véhicule est déterminé et que par sommation successive (26) le poids total du véhicule est calculé

2. Dispositif selon revendication 1
**caractérisé par le fait**
**que** la distance entre les senseurs est plus grande que la longueur du contact des pneux avec la route mais plus petite que la distance entre les axes du véhicule

3. Dispositif selon revendications 1 et 2
**caractérisé par le fait**
**que** les senseurs sont du type mécanique-hydraulique

4. Dispositif selon la revendication 3
**caractérisé par le fait**
**que** les senseurs sont formés par des éléments comprenant un piston (4) qui agit sur un tuyau déformable élastiquement (5) et rempli par un liquide incompressible (6)
